Europäisches Patentamt

European Patent Office

Office européen des brevets

(19)

(11) Veröffentlichungsnummer: **0 264 058 B1**

# EUROPÄISCHE PATENTSCHRIFT

(12)

(45) Veröffentlichungstag der Patentschrift: **02.10.91**

(51) Int. Cl.⁵: **B62D 33/04, B62D 27/02**

(21) Anmeldenummer: **87114639.5**

(22) Anmeldetag: **07.10.87**

(54) Kastenkonstruktion, insbesondere für Nutzfahrzeuge wie beispielsweise Brandschutzfahrzeuge.

(30) Priorität: **15.10.86 DE 3635039**

(43) Veröffentlichungstag der Anmeldung:
**20.04.88 Patentblatt 88/16**

(45) Bekanntmachung des Hinweises auf die
Patenterteilung:
**02.10.91 Patentblatt 91/40**

(84) Benannte Vertragsstaaten:
**AT CH DE FR GB LI NL**

(56) Entgegenhaltungen:
**DE-A- 1 924 009**
**DE-A- 2 600 816**
**US-A- 3 296 759**

(73) Patentinhaber: **Iveco Magirus Aktiengesellschaft**
**Schillerstrasse 2 Postfach 27 40**
**W-7900 Ulm/Donau(DE)**

(72) Erfinder: **Seidel, Wolfgang, Dipl.-Ing.(FH)**
**Eberhardtstrasse 44**
**W-7900 Ulm(DE)**
Erfinder: **Arlt, Andreas, Dipl.-Ing.(FH)**
**Hans-Acker-Weg 1**
**W-7900 Ulm(DE)**

(74) Vertreter: **Socha, Peter**
**Iveco Magirus AG Postfach 2740 Schillerstrasse 2**
**W-7900 Ulm(DE)**

## Beschreibung

Die Erfindung betrifft eine Kastenkonstruktion, insbesondere für Nutzfahrzeuge wie beispielsweise Brandschutzfahrzeuge gemäß Oberbegriff des Anspruchs 1.

Eine Kastenkonstruktion der vorgenannten Art ist aus DE-U-83 26 978 bekannt, wobei die Längsführungen plattige oder schwalbenschwanzförmige einander gegen überliegende innere Stege der Profilleisten sind, so daß hinter den Stegen Hinterschneidungen entstehen, in die das Gegenstück eingesetzt werden kann. Ein eingesetztes Gegenstück wird mit einem Eckverbindungsstück auf der Vorderseite der beiden Längsführungen mittels Schraube angezogen, so daß im angezogenen Zustand der Schraube eine Klemmverbindung zwischen Gegenstück, Eckverbindungsstück und zwischengeordneten Längsführungen entsteht. Das Gegenstück gemäß DE-U-83 26 978 ist an seinen Eingriffsflächen mit einer Zahnung versehen, um einen zusätzlichen mechanischen Halt zwischen Gegenstück und Längsführungen der Profilleisten einzurichten. Schwalbenschwanzförmige Längsführungen an Profilleisten einer Kastenkonstruktion der eingangs genannten Art sind auch aus DE-A-34 46 734 bekannt, die mit entsprechend konfigurierten Eingriffsflächen von Eckverbindungsstücken und Gegenstücken ohne Zahnausbildung zusammenwirken. Vorgenannten Konstruktionen haftet grundsätzlich der Nachteil an, daß eine Montage der Einzelteile des Gerippes mit ihren Klemmverbindungen an schwierigen Stellen (z.B. über Kopf oder senkrecht) erschwert ist. Das Gegenstück muß grundsätzlich mit dem zu verschraubenden Teil vormontiert werden, was zur Folge hat, daß die Montageperson aufgrund der nicht einsehbaren Montagestelle nicht mit Bestimmtheit weiß, ob nun das Gegenstück verdreht hinter den Hinterschneidungen oder in der richtigen Stellung montiert wird. Besonderer Nachteil ist, daß bei entsprechenden Anzugsmomenten und der Streuung sich das Gegenstück grundsätzlich elastisch verformt, d.h. durchbiegt. Dies hat zur Folge, daß keine Flächen-, sondern eine Linienbelastung an der Klemmfläche entsteht, wodurch die Kraftübertragung in großem Maße beeinträchtigt wird.

Aufgabe der Erfindung ist die Vermeidung der vorgenannten Nachteile durch Schaffung einer Kastenkonstruktion der eingangs genannten Art, welche einfach und montagefreundlich konzipiert ist und insbesondere keine nennenswerte Beeinträchtigung der Kraftübertragung an der Klemmfläche durch elastische Verformung des Eckverbindungs- und Gegenstücks zuläßt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Ansprüche 2 bis 9.

Wesensmerkmal der Erfindung ist mithin die kugelgelenkartige Ausgestaltung der Klemmfläche der Profilleiste bei entsprechender Gegenkonfiguration des Eckverbindungsstücks und Gegenstücks. Die gewölbte Klemmfläche bleibt hinsichtlich ihrer Größe auch dann voll wirksam, wenn sich beispielsweise das Gegenstück durch mögliche auftretende Streuungen des Anzugsmomentes während der Fertigung bzw. Spannungsspitzen während des Einsatzes auf das Gerippe und dessen Verbindungen verbogen hat. Hierdurch wird die bestmögliche Kraftübertragung eingerichtet. Die beiden einander gegenüberliegenden inneren Längsführungen der Profilleisten brauchen hierbei nicht unbedingt nach außen konvex gewölbt in Längsrichtung der Profilleisten gestaltet sein, sie können auch Konkavwölbung besitzen bei entsprechender Gegenkonfiguration von Gegenstück und Eckprofilstück, d.h. nach Art einer "Gelenkpfanne".

Aufgrund der Wölbung der Längsführungen der Profilleisten geht gleichzeitig der weitere Vorteil einher, daß sich Eckverbindungsstück und Gegenstück bezüglich der zu verbindenden Profilleisten exakt in ihrer Klemmstellung positionieren lassen. Dies gilt insbesondere für das Gegenstück, das von außen für eine Montageperson nur schwer einzusehen ist und bei einem Anziehen der Verbindungsschraube sich selbsttätig in die Klemmstellung dreht, sofern es vorher nicht exakt diese Stellung einnimmt. Dadurch wird die Montagefreundlichkeit vor allem in den Bereichen "über Kopf" und "senkrecht" verbessert. Eine Sichtkontrolle, ob das Gegenstück in der richtigen Position festgeklemmt ist, kann jederzeit erfolgen. Besitzt das Gegenstück einen zusätzlichen Bund, so erhöht sich die verfügbare Gewindelänge und verbessert mithin das Verhältnis zwischen Schraubendurchmesser und Gewindelänge. Ist in vorteilhafter Weiterbildung der Erfindung an der Oberseite des Gegenstücks nicht nur ein Bund, sondern zusätzlich auf den Bund ein Kreisring, beispielsweise eine Kunststoffrosette aufgesetzt, deren Außendurchmesser größer ist als die Breite zwischen den Klemmflächen der Profilleiste, wird erreicht, daß das Gegenstück an jeder beliebigen Stelle in Längsrichtung der Profilleiste angebracht werden kann. Das Gegenstück trägt sich selbst durch die Klemmwirkung zwischen Rosette und Klemmfläche.

Die Erfindung wird nachfolgend in einem Vergleich zum eingangs genannten Stand der Technik anhand eines Ausführungsbeispiels unter Bezugnahme auf die beigefügte Zeichnung näher erläutert; es zeigen:

Fig. 1      einen     schematischen     Querschnitt durch eine Profilleiste im Bereich der Klemmverbindung gemäß der Erfindung auf der linken und gemäß dem Stand der Technik auf der rechten Seite,

Fig. 2     eine schematische Draufsicht auf die Profilleiste gemäß Fig. 1, links unter Weglassung des oberen Eckprofilstücks, und

Fig. 3     die Ausführungsform des Stands der Technik gemäß Fig. 1 bei maximaler Klemmbeanspruchung.

Gemäß Zeichnung umfaßt der Stand der Technik sowie die Erfindung Profilleisten 2, die mittels winkliger Eckverbindungsstücke 3 rechtwinklig zu einem Gerippe einer Kastenkonstruktion 1 zusammengesetzt sind, die den Aufbau eines (nicht veranschaulichten) Brandschutzfahrzeuges darstellt.

Jedes Eckverbindungsstück 3 besitzt in Zuordnung zu einer Klemmbefestigung mit einer zugehörigen Profilleiste 2 ein Gegenstück 4, wobei Eckverbindungsstück 3 und Gegenstück 4 durch eine (nicht veranschaulichte) Schraubverbindung zwecks Erzeugung einer Klemmkraft (F) angezogen werden können. Die Klemmkraft F wirkt auf zwei innere einander gegenüberliegende Längsführungen 5,6, die einstückig mit der zugehörigen Profilleiste 2 stegartig ausgebildet sind.

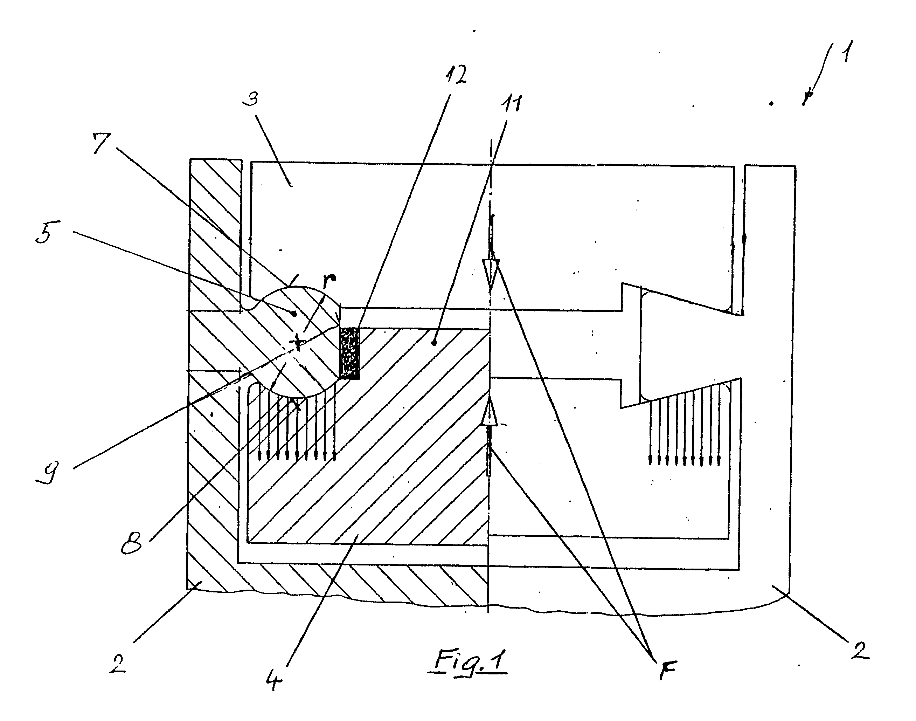

Nach dem Stand der Technik gemäß Fig. 1, rechts, und Fig.3 sind die Längsführungen schwalbenschwanzförmig ausgebildet mit entsprechender Gegenkonfiguration der Eingriffsflächen 7,8 des Eckverbindungsstücks 3 bzw. Gegenstücks 4, während nach der Erfindung die Längsführungen 5,6 querschnittsmäßig konvex gewölbt und insbesondere im Bereich der Eingriffsflächen 7,8 des Eckverbindungsstücks 3 bzw. Gegenstücks 4 kreisförmig mit dem Radius r ausgebildet sind. Ein Anzugsmoment auf die nicht veranschaulichte Schraube zwischen Eckverbindungsstück 3 und Gegenstück 4 erzeugt bei nichtelastischer Verformung des Gegenstücks 4 auf die Eingriffsflächen 7,8 eine Flächenbelastung, die durch Mehrfachpfeile sowohl bei der Erfindung als auch beim Stand der Technik in Fig. 1 gezeigt ist. Die im wesentlichen U-förmige Profilleiste 2 besitzt an innerster Stelle der stegartigen Längsführungen 5,6 parallel zu den Schenkeln des "U" Abflachungen in Form von planen Stirnseiten 9 und 10.

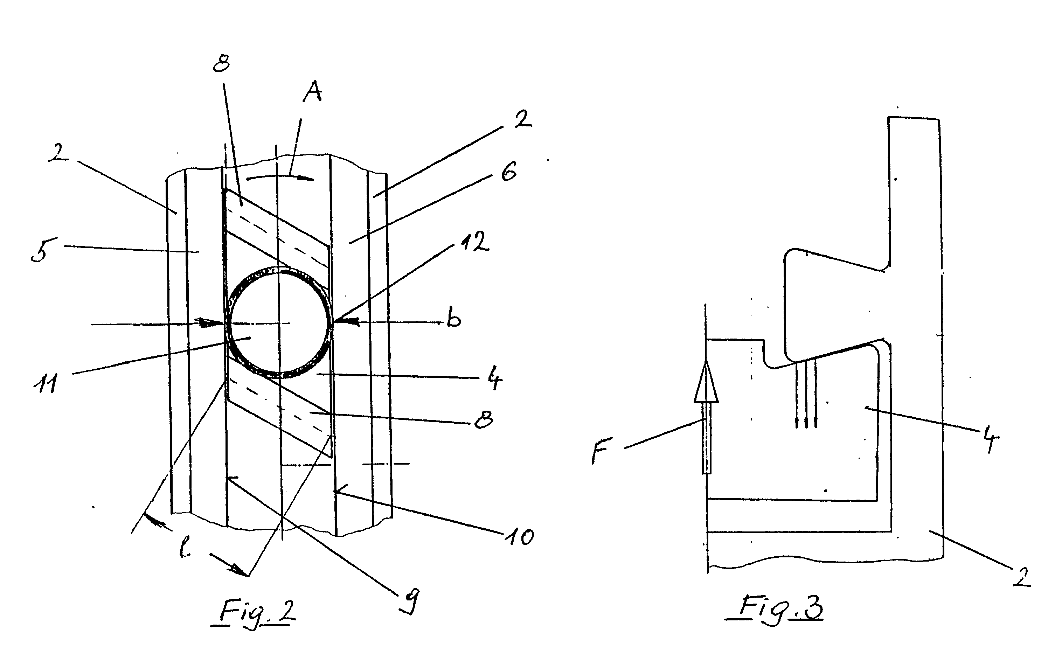

Ein erfindungsgemäßes Gegenstück 4 gemäß Fig. 1, links, und Fig. 2 umfaßt zwischen den Längsführungen 5,6 einen kreisförmigen integrierten Bund 11, auf den ein Klemmring 12 in Form einer Kunststoffrosette in fester Verbindung aufgesteckt ist, wobei der Außendurchmesser des Klemmrings 12 in einem verschieblichen Preßsitz zwischen den Stirnseiten 9,10 der Längsführungen 5,6 aufgenommen ist, so daß ein in der Längsaussparung der U-förmigen Profilleiste 2 aufgenommenes Gegenstück 4 sowohl in der Profilleiste verschoben als auch gemäß Pfeil A der Fig. 2 um seine Vertikalachse gedreht werden kann, wenn das Eckverbindungsstück 3 nicht mit dem Gegenstück 4 durch Schraube verbunden ist. Mithin können vorab die jeweils benötigten Gegenstücke 4 in der in Fig. 2 veranschaulichten Lage in die Längsaussparung der Profilleiste 2 eingebracht und in etwa an der benötigten Klemmverbindungsstelle positioniert werden. Die Einbringung in die Längsaussparung der Profilleisten 2 ist möglich, da jedes Gegenstück 4 mit Ausnahme des Klemmrings 12 in seiner Breite b schmaler ausgebildet ist als der Abstand zwischen den Stirnseiten 9 und 10 der Längsführungen 5,6. Gleichwohl ist die wirksame Länge (1) der Eingriffsflächen 8 des Gegenstücks 4 größer als die Breite b des Gegenstücks selbst, da diese sich in einer gegenüberliegenden Schräganordnung zur Quererstreckung der Profilleiste 2 befinden, wie dies in Fig.2 veranschaulicht ist. Die beiden gegenüberliegenden Eingriffsflächen 8 weisen in ihrer Schrägerstreckung gemäß Fig.2 eine Konkavwölbung mit dem Krummungsradius r auf, wie dies der Fig. 1 zu entnehmen ist.

Eine Klemmverbindung wird dadurch eingerichtet, daß das Gegenstück 4 gemäß Fig. 2 in Richtung des Pfeils A solange gedreht wird, bis die schrägen Eingriffsflächen 8 mit den Längsführungen 5,6 der Profilleisten 2 ausgerichtet sind. Bei einem Anziehen der Schraube gelangen sämtliche konkaven Eingriffsflächen 7,8 der erfindungsgemäßen Eckverbindungsstücke 3 und Gegenstücke 4 in einen formschlüssigen Klemmeingriff. Geringfügige Fehlausrichtungen des Gegenstücks 4 werden bei einem Anziehen der Schraube selbsttätig ausgerichtet, wobei bei maximalem Anzugsmoment der Schraube exakte Formschlüssigkeit der Eingriffsflächen 7,8 an den Längsführungen 5,6 gegeben ist.

Durch mögliche auftretende Streuungen des Anzugsmoments der Schraube während der Fertigung bzw. Spannungsspitzen während des Einsatzes auf das Profilleisten-Gerippe wird grundsätzlich eine geringfügige elastische Durchbiegung am Gegenstück 4 hervorgerufen. Da gemäß der Erfindung die Klemmverbindung kugelgelenkartig aufgebaut ist und die Spannschraube zentral verläuft, bleibt gemäß der Erfindung bei maximalem Anzugsmoment fortwährend die optimale Flächenpressung gemäß Fig. 1, links, erhalten, während nach dem Stand der Technik die Flächenpressung an den Längsführungen bis hin zu einer Linienbelastung reduziert wird, wie dies in Fig. 3 gezeigt ist. Die Kraftübertragung an der Klemmstelle wird gemäß der Erfindung mithin in jedem Belastungsfalle groß gehalten, während sie nach dem Stand der Technik stark beeinträchtigt ist.

## Patentansprüche

1. Kastenkonstruktion (1), insbesondere für Nutzfahrzeuge, wie beispielsweise Brandschutzfahrzeuge, mit einem Außengerippe in Form von zusammengesetzten Profilleisten (2), die durch Zwischen- und/oder Eckverbindungsstücke (3) und Gegenstücke (4) an inneren gegenüberliegenden Längsführungen (5,6) der Profilleisten (2) miteinander verbunden sind, dadurch gekennzeichnet, daß die Längsführungen (5,6) zumindest im Bereich der Eingriffsflächen (7 bzw. 8) mit den Eckverbindungsstücken (3) und Gegenstücken (4) im Querschnitt der Profilleisten (2) konvex bzw. konkav gewölbt und entsprechend konkav bzw. konvex gewölbt die Eingriffsflächen (7 bzw. 8) der Eckverbindungsstücke (3) und Gegenstücke (4) ausgebildet sind.

2. Kastenkonstruktion nach Anspruch 1, dadurch gekennzeichnet, daß die Konvexwölbung der Längsführungen (5,6) bzw. Konkavwölbung der Eckverbindungsstücke (3) und Gegenstücke (4) gleichen Krümmungsradius (r) besitzen.

3. Kastenkonstruktion nach Anspruch 1 oder 2, dadurch gekennzeichnet, daß die beiden Längsführungen (5 bzw. 6) plane innere Stirnseiten (9 bzw. 10) besitzen.

4. Kastenkonstruktion nach Anspruch 3, dadurch gekennzeichnet, daß der Abstand der beiden planen inneren Stirnseiten (9, 10) geringfügig kleiner ist als die Breite (b) des Gegenstücks (4) im Bereich seiner Eingriffsflächen (Fig. 2).

5. Kastenkonstruktion nach Anspruch 3 oder 4, dadurch gekennzeichnet, daß das Gegenstück (4) einen zentralen in Draufsicht kreisförmigen Bund (11) im Bereich zwischen den beiden Längsführungen (5,6) aufweist.

6. Kastenkonstruktion nach Anspruch 5, dadurch gekennzeichnet, daß auf dem kreisförmigen Bund (11) in einem formschlüssigen Paßsitz ein Klemmring (12) aufgesetzt ist, dessen Außendurchmesser in einen verschieblichen Klemmeingriff mit den beiden Stirnseiten (9,10) der Längsführungen (5,6) bringbar ist.

7. Kastenkonstruktion nach Anspruch 6, dadurch gekennzeichnet, daß der Klemmring (12) als Kunststoffrosette ausgebildet ist.

8. Kastenkonstruktion nach einem der Ansprüche 4 bis 7, dadurch gekennzeichnet, daß die Länge (1) der Eingriffsflächen (8) des Gegenstücks (4) größer als die Breite (b) des Gegenstücks (4) ist (Fig. 2).

9. Kastenkonstruktion nach einem der Ansprüche 1 bis 8, dadurch gekennzeichnet, daß das Gegenstück (4) einen zentralen Durchgang für eine Bolzenverbindung mit dem Eckverbindungsstück (3) bzw. ein zentrales Innengewinde für eine Spannschraube aufweist, durch die das Eckverbindungsstück (3) zusammen mit dem Gegenstück (4) in einen Klemmeingriff mit den Längsführungen (5,6) bringbar ist.

## Claims

1. A body construction part (1), especially for utility vehicles, such as, for example, fire protection vehicles, with an outer framework in the form of assembled sectional strips (2), which are connected with each other by intermediate- and/or corner connecting pieces (3) and counter pieces (4) on inner opposed longitudinal guides (5,6) of the sectional strips (2), characterised in that, the longitudinal guides (5,6) at least in the region of the zones of contact (7 or respectively 8) with the corner connecting pieces (3) and counter pieces (4) are curved in a convex or respectively concave shape in the cross-section of the sectional strips (2) and accordingly the zones of contact (7 or respectively 8) of the corner connecting pieces (3) and counter pieces (4) are curved in a concave or respectively convex shape.

2. A body construction part according to Claim 1, characterised in that, the convex curvature of the longitudinal guides (5,6) or respectively concave curvature of the corner connecting pieces (3) and counter pieces (4) have the same radius of curvature (r).

3. A body construction part according to Claim 1 or 2, characterised in that, the two longitudinal guides (5 or respectively 6) have flat inner end faces (9 or respectively 10).

4. A body construction part according to Claim 3, characterised in that, the spacing of the two flat inner end faces (9,10) is slightly smaller than the width (b) of the counter piece (4) in the region of its zones of contact (Fig. 2).

5. A body construction part according to Claim 3 or 4, characterised in that, the counter piece (4) has a central collar (11), which is circular in plan view, in the region between the two longitudinal guides (5,6).

6. A body construction part according to Claim 5, characterised in that, on the circular collar (11) in a form-locking press fit a clamping ring (12) is placed, the outer diameter of which is able to be brought into a displaceable clamping engagement with the two end faces (9,10) of the longitudinal guides (5,6).

7. A body construction part according to Claim 6, characterised in that, the clamping ring (12) is constructed as an annular part of plastics material.

8. A body construction part according to one of Claims 4 to 7, characterised in that,the length (1) of the zones of contact (8) of the counter piece (4) is greater than the width (b) of the counter piece (4) (Fig. 2).

9. A body construction part according to one of Claims 1 to 8, characterised in that,the counter piece (4) has a central passage for a bolted union with the corner connecting piece (3) or respectively has a central internal thread for a tightening screw, through which the corner connecting piece (3) together with the counter piece (4) is able to be brought into a clamping engagement with the longitudinal guides (5,6).

## Revendications

1. Construction de caisse (1), en particulier pour véhicule utilitaire, comme par exemple véhicule de lutte contre l'incendie, avec une ossature externe en forme de longerons profilés assemblés (2), qu'on assemble par des pièces de connexion (3) d'angle ou intermédiaires et des contre-pièces (4) sur des guidages longitudinaux (5, 6) internes se faisant face des longerons profilés (2), caractérisé en ce que les guidages longitudinaux (5, 6) au moins dans le domaine des faces en prise (7 ou 8) avec les pièces de connexion d'angle (3) et les contre-pièces (4) ont, en coupe des longerons profilés (2) des faces en prise incurvées de forme convexe ou concave ou respectivement concave ou convexe pour les faces en prise (7 ou 8) des pièces de connexion (3) d'angle et les contre-pièces (4).

2. Construction de caisse selon la revendication 1, caractérisée en ce que la courbure convexe des guidages longitudinaux (5, 6) ou la courbure concave des pièces de connexion d'angle (3) et des contre-pièces (4) ont le même rayon de courbure (r)

3. Construction de caisse selon la revendication 1 ou 2, caractérisé en ce que les deux guidages longitudinaux (5 ou 6) ont des faces frontales internes planes (9 ou 10).

4. Construction de caisse selon la revendication 3, caractérisé en ce que l'écartement des deux faces frontales planes internes (9, 10) est légèrement plus petit que la largeur (b) de la contre-pièce (4) dans le domaine de ses faces de prise (Fig.2).

5. La construction de caisse selon la revendication 3 ou 4, caractérisé en ce que la contre-pièce (4) présente un collet (11) circulaire central en vue de dessus dans le domaine compris entre les deux guidages longitudinaux (5, 6).

6. Construction de caisse selon la revendication 5, caractérisé en ce qu'on place sur le collet circulaire (11) en ajustement géométrique fin une bague de serrage (12), dont le diamètre externe est en prise de pincement coulissante avec les deux faces frontales (9, 10) des guidages longitudinaux (5, 6).

7. Construction de caisse selon la revendication 6, caractérisé en ce que la bague de serrage (12) est une rosette en matière plastique.

8. Construction de caisse selon l'une des revendications (4 à 7), caractérisé en ce que la longueur (1) des faces en prise (8) de la contre-pièce (4) est plus grande que la largeur (b) de la contre-pièce (4) (Fig. 2).

9. Construction de caisse selon l'une des revendications 1 à 8 caractérisée en ce que la contrepièce (4) présente un passage central pour une fixation par boulon avec la pièce de connexion d'angle ou un filetage central interne pour une vis de serrage, grâce à laquelle on peut assembler la pièce de connexion d'angle (3) avec la contre-pièce (4) dans une prise de serrage avec les guidages (5, 6) longitudinaux.

Fig.1

Fig. 2

Fig. 3

EP 0 264 058 B1